# EUROPÄISCHE PATENTANMELDUNG

(11) **EP 0 756 903 A2**
(43) Veröffentlichungstag der Anmeldung: **05.02.1997**
(21) Anmeldenummer: 96112505.1
(22) Anmeldetag: 02.08.1996
(51) Int. Cl.: B09C 1/06, A62D 3/00, C02F 11/00

(54) **Verfahren zum Abtrennen von flüchtigen Bestandteilen aus Feststoffgemischen, insbesondere aus Bauschutt, Bodenmaterial und Schlammen**

(30) Priorität: 04.08.1995 DE 19528708
(71) Anmelder: Buna Sow Leuna Olefinverbund GmbH, 06258 Schkopau (DE); RUHRKOHLE UMWELTTECHNIK GMBH, 46236 Bottrop (DE); FRESENIUS UMWELTTECHNIK GMBH, D-45699 Herten (DE)
(72) Erfinder: Richter-Politz, Ingrid, Dr., 06116 Halle (DE); Eknigk, Steffen, 06258 Schkopau (DE); Niedballa, Dieter, 06120 Halle (DE); Kanitz, Jürgen, 44805 Bochum (DE); Thorwart, Rainer, 44149 Dortmund (DE)

(57) **Zusammenfassung**

Die Entfernung von flüchtigen organischen oder anorganischen Bestandteilen aus Feststoffgemischen, insbesondere aus kontaminierten Boden- und Bauschuttmaterialien und Schlämmen erfolgt durch Strippen mittels eines Trägerdampfstromes. Die Effizienz des Verfahrens wird erfindungsgemäß dadurch erhöht, daß der Trägerdampfstrom im Kreuzstrom das Feststoffgemisch passiert und dabei vom Produkteintrag zum Produktaustrag Massenstrom- und oder Energiegradienten aufweist.

## Beschreibung

Die Erfindung betrifft ein Verfahren zur Reinigung von Feststoffgemischen, die mit flüchtigen Bestandteilen kontaminiert sind, insbesondere solchen, die vorrangig durch Chemie- und Bergbaustandorte verursacht wurden.

Die Abtrennung oder Gewinnung mehr oder weniger flüchtiger Stoffe aus Stoffgemischen mit hohem Feststoffanteil mittels Trägerdampf ist in Form der Wasserdampfdestillation bekannt. Der Anwendung dieses Verfahrensprinzipes auf die Abtrennung von flüchtigen Bestandteilen aus Bodenmaterialien oder anderen Feststoffhaufwerken ist in letzter Zeit mehr Beachtung geschenkt worden.

So wird in der DE-OS 43 18 661 A 1 eine Vorrichtung und ein Verfahren zur Reinigung von verunreinigtem Bodenmaterial angegeben, bei dem das zu reinigende Bodenmaterial zunächst durch indirekte Beheizung auf eine Temperatur oberhalb der Siedetemperatur des Wassers erhitzt wird. Anschließend erfolgt in der gleichen Vorrichtung, aber in derem letzten Drittel, eine Behandlung des erhitzten, feinkörnigen Bodenmaterials mit überhitztem Wasserdampf. Während dieses Vorganges wird das Material innerhalb der Vorrichtung mechanisch vom Eintrag zum Austrag transportiert. Die aus dem Bodenmaterial durch die thermische Behandlung entweichenden flüchtigen Bestandteile gelangen gemeinsam mit dem Wasserdampf in eine fraktionierende Kondensation.

Mit dem Patent DE 43 03 722 C 1 ist ein Verfahren zur thermischen Abtrennung von organischen und/oder anorganischen Stoffen aus kontaminiertem Material bekannt. Über einen gasdurchlässigen Boden wird das zu reinigende Material von einem Produkteintrag zu einem Produktaustrag bewegt, wobei im Kreuzstrom Heißgas oder Heißdampf das Material so durchströmt, daß ein Fluidbett entsteht. Die Gaszuführung erfolgt gleichmäßig verteilt über den sich bewegenden Produktstrom. Der mit den Kontaminanten beladene Gasstrom wird in einer nachfolgenden Kondensationsstufe von den flüchtigen Bestandteilen getrennt, die inerten Bestandteile werden in den Kreislauf zurückgeführt.

Mit einer, an die organischen Stoffe angepaßten variablen Heißgastemperatur zur Strippung, erfolgt das Aufheizen des kontaminierten Materials bis zu einer Temperatur von 700 °C.
Auch können die zu entfernenden organischen oder anorganischen Stoffe in einer Vorstufe des Verfahrens auf die Behandlungstemperatur erhitzt und danach einer Behandlung mit Heißgas oder Heißdampf unterzogen werden.

In der Patentanmeldung PCT/NO 89/00032 (Veröffentlichung vom 19.10.1989 WO 89/09638) wird ein Verfahren zur Behandlung von festem Material zur Entfernung von flüchtigen Stoffen aus diesen vorgeschlagen, bei welchem das feste Material indirekt beheizt und in einem Teilbereich des Apparates einer Wasserdampfstrippung ausgesetzt ist.
Das von einem Produkteintrag zu einem Produktaustrag geförderte feste Material wird im vorderen Teil der Apparatur (im Bereich von 0 % bis 20 % der Strecke zwischen Produkteintrag und Produktaustrag) indirekt aufgeheizt. Im Bereich der Strecke von 20 % bis 50 % zwischen Produkteintrag und Produktaustrag der Apparatur erfolgt eine Bedampfung mit Heißdampf. Im restlichen Teil des Transportweges zum Produktausgang erfolgt eine Abkühlung des Materials.

Den aufgeführten Verfahren zur Wasserdampf-Destillation von kontaminiertem Bodenmaterial ist gemeinsam nachteilig, daß nach einer Phase der starken Abnahme der im Feststoff beinhalteten Kontamination der Prozeß fast vollständig zum Erliegen kommt und eine darauffolgende restlose Entfernung der flüchtigen organischen oder anorganischen Bestandteile nur mit hohem energetischen Aufwand möglich ist. Es besteht außerdem die Gefahr, daß im vorderen Teil des Apparates (Zone der Trocknung) eine völlige Austrocknung der kontaminierten Feststoffgemische erfolgt, so daß die darauffolgende Trägerdampfdestillation nicht den gewünschten Effekt erbringt. Beim Einsatz von Heißgas und Wasserdampf im Temperaturbereich oberhalb von 400°C können pyrolytische Effekte auftreten, die zu einer Denaturierung insbesondere von Bodenmaterial führen können.

Die bekannten Strippverfahren mit Wasserdampf zum Austreiben von flüchtigen Bestandteilen, wie z.B. substituierte und nichtsubstituierte Kohlenwasserstoffe, einschließlich solcher Stoffgruppen, wie der Mineralölkohlenwasserstoffe (MKW), der BTX- Aromaten, der chlorierten leicht- und schwerflüchtigen Kohlenwasserstoffe (CKW), der polycyklischen aromatischen Kohlenwasserstoffe (PAK), der Furane, der Dioxine, der Cyanide u.ä, verfolgen eine ökonomisch wirksame Zielstellung.

Der Erfindung liegt die Aufgabe zugrunde, unter Anwendung eines Trägergasstromes aus einem indirekt aufgeheizten Feststoffgemisch, insbesondere aus Boden- und Bauschuttmaterial sowie Schlämmen, flüchtige organische und/ oder anorganische Verbindungen mit hoher Effizienz zu entfernen. Der energetische Aufwand soll dabei ein Minimum erreichen.
Die Aufgabe wird erfindungsgemäß durch das in den Patentansprüchen 1 bis 5 dargestellte Verfahren gelöst.
Die Erfindung betrifft ein Verfahren, dessen Ausgangspunkt dem Verfahrensprinzip der Wasserdampfdestillation mit überhitztem Wasserdampf im Temperaturbereich von oberhalb des Siedepunktes für Wasser bis maximal 400°C zugrunde liegt.
Um die Erwärmung des kontaminierten Feststoffgemisches energetisch effektiv zu gestalten, erfolgt gleichzeitig eine indirekte Erhitzung des kontaminierten Materials auf Temperaturen bis maximal 400°C.
Überraschend wurde nun gefunden, daß entgegen der bisher praktizierten Konstanz des Trägerdampfstromes über die Apparatelänge und somit nahezu gleichbleibender Triebkraft sowie mit Vortrocknung des Materials außerhalb oder im Eingangsbereich des Apparates, erheblich verbesserte Wirkungsgrade erreicht werden, wenn das mit anhaltender Feuchte in den mäßig geheizten Apparat eingetragene Stoffgemisch sofort kräftigen Masseströmen des Trägerdampfes im Kreuzstrom ausgesetzt, transportiert und durchmischt wird. Überraschend bei dieser Verfahrensweise ist auch, daß die üblicherweise nur bei erheblich erhöhten Temperaturen unter stark vermindertem Druck beeinflußbaren mono- oder oligomolekularen Adsorptionsschichten der flüchtigen Stoffe auf Oberflächen und in Poren nach dem erfindungsgemäßen Verfahren ähnlich zum Verdampfen befördert werden und damit ausgezeichnete Trennungsgrade erzielt werden.
Problembehafteter sind solche Strippverfahren unter Nutzung der Trägerdampfdestillation, wenn insbesondere flüchtige und schwerflüchtige anorganische Verbindungen aus den kontaminierten Materialien (Boden, Bauschutt, Schlämme) zu entfernen sind. Solche Verbindungen können sein, Quecksilber in ungebundener oder in gebundener Form beispielsweise als Quecksilberchloride, Quecksilbersulfid, Hg- Huminsäurekomplexe oder Hg-organischen Verbindungen. Eine ähnliche Situation ist auch bei weiteren flüchtigen Metallen und deren Verbindungen (z.B. Arsen, Cadmium) festzustellen.
Bekanntlich sind Korngröße, adhäsiver Charakter, Makro- und Mikroporenvolumen und der Kontaminationsgrad selbst Kriterien für die Gaspermeabilität und die Mobilität flüchtiger Kontaminate. Mehr oder weniger anhaftende Feuchtigkeit scheint, den Vorschlägen von Trocknungsmaßnahmen vor der Dampfbehandlung zufolge, den Trenneffekt mittels Trägerdampf erheblich zu mindern.
Das Ziel weitestgehender Entfernung von im Prinzip flüchtigen Schadstoffen aus Böden, Abrißmaterialien und Schlämmen mittels entsprechendem Trägerdampf kann dann als erreicht gelten, wenn das betreffende Material ökologisch unbedenklich wieder nutzbar ist bzw. einer eingeschränkten Verwendung zugeführt werden kann.

Die Zufuhr von überhitztem Wasserdampf erfolgt als variabler Massenstrom bezogen auf die Strecke zwischen Produkteintrag und Produktaustrag der Behandlungsapparatur. Daher ist die eingetragene Dampfmenge am Produkteintrag am größten und nimmt zum Produktaustrag hin ab.
Das Verfahren ist aber auch so durchführbar, daß die Dampfmenge am Produkteintrag gering ist und zum Produktaustrag hin ständig größer wird.
Gleichfalls kann aber auch die im Kreuzstrom zum Produkttransport eingetragene überhitzte Dampfmenge über die Strecke zwischen dem Produktein und -austrag zwischen einen Minimal- und einem Maximalwert nach einem konstanten oder variablen Zeitraster pulsieren.
Es ist aber bei der Durchführung des erfindungsgemäßen Verfahrens auch möglich, zusätzlich zu dem variablen Massestrom des überhitzten Dampfes auch zonal den energetischen Zustand des Dampfes zu verändern. So können zusätzlich beispielsweise der Temperaturzustand, der Sättigungsgrad oder der Druck geändert werden. Vom Produkteintrag in den Apparat bis zum Produktaustrag kann der im Kreuzstrom das Material innig kontaktierende Trägerdampfmassestrom erheblich verringert und damit Verdampfungsaufwand und Kondensationsleistung reduziert werden, ohne die Trenneffektivität dadurch zu mindern.

Das vorgestellte Verfahren gestattet eine Reduzierung der Trägerdampfmenge pro eingesetzter Masseeinheit Feststoff, woraus nicht nur eine deutliche Energieeinsparung für den eigentlichen Destillationsprozeß, sondern auch eine Reduzierung des energetischen und apparativen Aufwandes für die folgenden Kondensationsstufen und für die Kühlung des dekontaminierten Feststoffes erfolgt. Es wird weiterhin durch das erfindungsgemäße Verfahren erreicht, daß nicht nur die grob an Feststoffen anhaftenden flüchtigen Stoffe, sondern auch die größten Anteile der thermodynamisch und kinetisch schwer zugänglichen adsorbierten Verunreinigungen entfernt werden.
Von Vorteil ist weiterhin, daß durch die im Behandlungsapparat erzeugte Wasserdampfatmosphäre sich eine Inertgaseinspeisung erübrigt und Falschluft verdrängt wird. Der Boden wird durch das Verfahren nicht denaturiert.

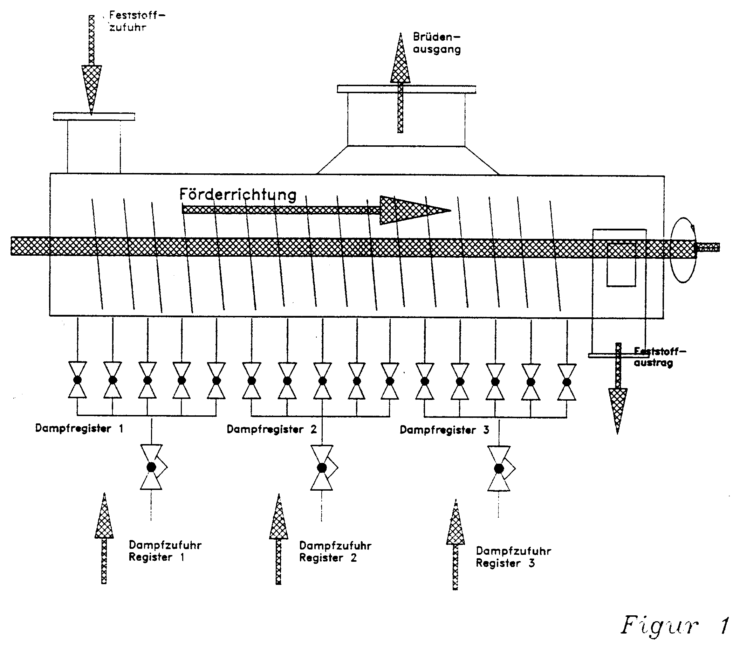

Die Erfindung wird an folgenden Beispielen näher erläutert (eine Behandlungsapparatur ist in Figur 1 dargestellt):

### Beispiel 1

Ein Bodenaushub mit einer Kontamination von 20.000.mg Hg pro kg Feststoff und einem Massenstrom von 100 - 150 kg Material pro Stunde wird in einem indirekt beheizten, liegenden Behandlungsapparat auf 340 °C erhitzt. Der Feststoff wird von einer ebenfalls indirekt beheizten Fördereinrichtung von einem Produkteintrag zu einem Produktaustrag transportiert. Im Kreuzstrom zur Förderrichtung erfolgt unterhalb des Feststoffes gleichmäßig über die Förderlänge verteilt der Eintritt von Heißdampf mit einer Temperatur von 250°C.
In der Nähe des Produkteintrages (Dampfregister 1) werden 12 kg/h Heißdampf und linear abnehmend zum Produktaustrag (Dampfregister 3 ) 5 kg/h Heißdampf dem Feststoff zugesetzt.
Die entstehenden Abgase werden oberhalb des Behandlungsapparates abgeführt und entsprechend einer Kondensation zugeführt. Der Bodenaushub enthält nach der Behandlung am Produktaustrag eine Restgehalt unter 30 mg Hg pro kg Feststoff.

### Beispiel 2

Ein Bodenaushub mit einer Kontamination von 20.000.mg Hg pro kg Feststoff und einem Massenstrom von 100 - 150 kg Material pro Stunde wird in einem indirekt beheizten, liegenden Behandlungsapparat auf 340 °C erhitzt. Der Feststoff wird von einer ebenfalls indirekt beheizten Fördereinrichtung von einem Produkteintrag zu einem Produktaustrag transportiert. Im Kreuzstrom zur Förderrichtung erfolgt unterhalb des Feststoffes gleichmäßig über die Förderlänge verteilt der Eintritt von Heißdampf mit einer Temperatur von 250°C.
In der Nähe des Produkteintrages (Dampfregister 1) werden 5 kg/h Heißdampf und linear abnehmend zum Produktaustrag (Dampfregister 3) 12 kg/h Heißdampf dem Feststoff zugesetzt.
Die entstehenden Abgase werden oberhalb des Behandlungsapparates abgeführt und entsprechend einer Kondensation zugeführt. Der Bodenaushub enthält nach der Behandlung am Produktaustrag eine Restgehalt unter 50 mg Hg pro kg Feststoff.

### Beispiel 3

Ein Bodenaushub mit einer Kontamination von 20.000.mg Hg pro kg Feststoff und einem Massenstrom von 100 - 150 kg Material pro Stunde wird in einem indirekt beheizten, liegenden Behandlungsapparat auf 340 °C erhitzt. Der Feststoff wird von einer ebenfalls indirekt beheizten Fördereinrichtung von einem Produkteintrag zu einem Produktaustrag transportiert. Im Kreuzstrom zur Förderrichtung erfolgt unterhalb des Feststoffes gleichmäßig über die Förderlänge verteilt der Eintritt von Heißdampf mit einer Temperatur von 300°C.
Die Dampfzufuhr erfolgt über die 3 vorhandenen Dampfregister so, daß jeweils nur über ein Dampfregister Dampf in den Apparat zugespeist wird. Der Wechsel von einem zum anderem Register erfolgt in einem Zeittakt von jeweils 30 Sekunden, so daß eine Pulsation des Dampfes entsteht. Der Wechsel der Dampfeinspeisung erfolgt von Register zu Register in der Reihenfolge 1 nach 2 nach 3 und wieder von 1 beginnend. Der mittlere Dampfinput ist mit ca. 5 kg Dampf pro Stunde eingestellt.
Die entstehenden Abgase werden oberhalb des Behandlungsapparates abgeführt und entsprechend einer Kondensation zugeführt. Der Bodenaushub enthält nach der Behandlung am Produktaustrag eine Restgehalt unter 50 mg Hg pro kg Feststoff.

### Beispiel 4

Ein Bodenaushub mit einer Kontamination von 20.000.mg Hg pro kg Feststoff und einem Massenstrom von 100 - 150 kg Material pro Stunde wird in einem indirekt beheizten, liegenden Behandlungsapparat auf 340 °C erhitzt. Der Feststoff wird von einer ebenfalls indirekt beheizten Fördereinrichtung von einem Produkteintrag zu einem Produktaustrag transportiert. Im Kreuzstrom zur Förderrichtung erfolgt unterhalb des Feststoffes gleichmäßig über die Förderlänge verteilt ein Eintritt für Heißdampf. In der Nähe des Produkteintrages (Dampfregister 1) werden 3 kg/h Heißdampf mit einer Temperatur von 200 °C, im Mittelteil der Apparatur (Dampfregister 2) werden 5 kg/h Heißdampf mit einer Temperatur von 370°C und am Produktaustrag (Dampfregister 3 ) werden 2 kg/h Heißdampf mit einer Temperatur von 200 °C dem Feststoff zugesetzt.
Die entstehenden Abgase werden oberhalb des Behandlungsapparates abgeführt und entsprechend einer Kondensation zugeführt. Der Bodenaushub enthält nach der Behandlung am Produktaustrag einen Restgehalt unter 20 mg Hg pro kg Feststoff.

## Patentansprüche

1. Verfahren zum Abtrennen von flüchtigen Bestandteilen aus Feststoffgemischen, insbesondere aus Bodenmaterial, Bauschutt oder Schlämmen, mit einer Anfangsfeuchte zwischen 1 und 30 Masse %, wobei das Feststoffgemisch von einem Produkteintrag zu einem Produktaustrag in einem geschlossenen Behandlungsraum an indirekt beheizten Flächen entlang zwangstransportiert, durchmischt und auf eine Temperatur von max. 400°C aufgeheizt wird, das Feststoffgemisch zwischen Produkten- und -austrag von einem Trägerdampfstrom annähernd quer zur Transportrichtung bei gleichbleibender Temperatur durchströmt und der mit den flüchtigen Bestandteilen beladene Trägerdampfstrom abgeleitet, einer Kondensation unterzogen und gegebenenfalls wieder dem Feststoffgemisch zugeführt wird, dadurch gekennzeichnet, daß der Trägerdampfstrom vom Produkteintrag zum Produktaustrag über die Behandlungslänge des Feststoffgemisches verteilt Massenstrom- und oder Energiegradienten aufweist.

2. Verfahren nach Anspruch 1, dadurch gekennzeichnet, daß der Massestrom des Trägerdampfes vom Produktein- zum Produktaustrag abnimmt.

3. Verfahren nach Anspruch 1, dadurch gekennzeichnet, daß der Massestrom des Trägerdampfes vom Produktein- zum Produktaustrag zunimmt.

4. Verfahren nach den Ansprüchen 1 bis 3, dadurch gekennzeichnet, daß der Massestrom des Trägerdampfes zwischen dem Produktein- und Produktaustrag nach einem konstanten oder variablen Zeitraster pulsiert.

5. Verfahren nach einem der Ansprüche 1 bis 4, dadurch gekennzeichnet, daß der energetische Zustand des eingespeisten Trägerdampfes variiert wird.
